# FASCICULE DE BREVET EUROPEEN

(11) **EP 1 466 692 B1**
(45) Date de publication et mention de la délivrance du brevet: **21.01.2009**
(21) Numéro de dépôt: 04290853.3
(22) Date de dépôt: 01.04.2004
(51) Int. Cl.: B23K 20/18, B23K 20/02, B21D 26/02, B21D 53/78, B23P 15/04, B23K 35/22

(54) **Procédé de fabrication d'une pièce mécanique creuse par soudage-diffusion et formage superplastique**
Verfahren zur Herstellung eines hohlen Bauteils durch Diffusionsschweissen und superplastisches Verformen
Method of manufacturing a hollow workpiece by diffusion welding and superplastic forming

(30) Priorité: 10.04.2003 FR 0304443
(43) Date de publication de la demande: 13.10.2004
(73) Titulaire: SNECMA, 75015 Paris (FR)
(72) Inventeur: Franchet, Jean-Michel, 75018 Paris (FR); Klein, Gilles, 95540 Mery-Sur-Oise (FR); Gesmier, Patrick, 95110 Sannois (FR)
(74) Mandataire: Cardy, Sophie Marie

(56) Documents cités:
- EP-A- 0 849 029
- FR-A- 2 739 045
- FR-A- 2 772 021
- US-A- 5 316 203
- US-A- 5 513 791

## Description

L'invention concerne un procédé de fabrication d'une pièce mécanique creuse par soudage-diffusion et formage superplastique.

Egalement, la présente invention se rapporte à la réalisation d'une aube creuse de turbomachine, en particulier une aube de rotor de soufflante, en particulier une aube de type à large corde.

On rappelle que la technique de soudage-diffusion consiste à mettre en contact à haute température, sous une certaine pression et pendant un certain temps, deux plaques d'un matériau donné. Le soudage des deux plaques s'opère alors par diffusion d'atomes, ce qui présente l'avantage de former une structure de liaison équivalente à la structure de base du matériau.

Dans le cas d'un soudage-diffusion associé à un formage superplastique, on utilise un produit anti-diffusion ou « stop-off » pour empêcher le soudage-diffusion dans les zones des faces des plaques situées en regard l'une de l'autre, qui seront ultérieurement gonflées pour l'obtention d'une pièce mécanique creuse.

Ainsi, le produit anti-diffusion formant une barrière de diffusion et qui est encore appelé « stop-off », est appliqué dans des zones prédéfinies sur au moins une des faces en regard des plaques en matériau superplastique de sorte que, à l'issue de l'étape de soudage-diffusion, les plaques ne sont pas soudées dans les zones recouvertes du produit anti-diffusion qui comporte généralement une charge en matériau réfractaire qui inhibe la diffusion des atomes des plaques à souder.

L'assemblage de plaques sélectivement soudées par soudage-diffusion est généralement ensuite soumis à un formage superplastique par chauffage de l'assemblage à une température compatible avec un comportement superplastique du matériau des plaques, dans un moule généralement fermé. Un gaz inerte est ensuite injecté sous une pression contrôlée dans les zones non soudées de l'assemblage, permettant ainsi un gonflement des plaques selon le profil du moule.

Bien évidemment, la qualité de la soudure issue de l'étape de de soudage-diffusion dépend des paramètres opératoires : température, pression et temps mais aussi des paramètres liés aux éléments à assembler :structure métallurgique, état de surface (propreté, rugosité). En conséquence, il est primordial d'éliminer toute source de contamination des surfaces à assembler avant la mise en température de l'étape de soudage-diffusion.

Ce nettoyage des surfaces est réalisé classiquement par une mise sous vide de la cavité formée par les deux surfaces à souder. Cependant dans le cas d'un soudage-diffusion associé à un formage superplastique, on utilise un produit anti-diffusion composé d'un liant, généralement organique, et d'une poudre d'un matériau anti-diffusion formé d'une charge en matériau réfractaire tel qu'une céramique (par exemple de l'oxyde d'yttrium, de l'alumine ou encore du nitrure de bore ou du graphite). Ce matériau anti-diffusion inhibe la diffusion des atomes des matériaux des plaques à souder.

Après application du produit anti-diffusion selon un motif prédéfini correspondant aux zones des surfaces à ne pas relier par soudage-diffusion, le liant est généralement dégradé pour ne conserver que la poudre du produit anti-diffusion, laquelle présente les propriétés anti- diffusion.

Cette application du produit anti-diffusion est réalisée généralement par la technique connue de sérigraphie qui utilise des écrans de sérigraphie qui comprennent un cadre entourant une trame au travers de laquelle le fluide à déposer passe suivant un motif prédéfini. La trame, réalisée au moyen d'une toile tendue en fils tissés, présente des parties colmatées qui bloquent le passage du fluide dans les zones qui ne doivent pas être revêtues de produit anti-diffusion.

Cette technique présente une résolution qui dépend notamment de la taille des mailles de la trame et du diamètre des fils, la taille des mailles devant être suffisamment grande pour permettre le passage du fluide à déposer mais suffisamment petite pour réduire des phénomènes de « marches ». De plus, cette technique de sérigraphie nécessite un système de positionnement du cadre par rapport à la pièce et de multiples réglages (tension de la toile, distance entre la toile et la pièce...), la toile de sérigraphie subissant une usure dans le temps qui se manifeste par une distorsion qui entraîne un décalage des motifs déposés.

On comprend que cette technique est relativement lourde à mettre en oeuvre, qu'elle donne un résultat non strictement reproductif dans le temps, et qu'elle nécessite une grande maîtrise de la viscosité du produit anti-diffusion.

Egalement, il est connu de déposer le produit anti-diffusion par pulvérisation au travers d'un masque comme dans le document FR 2 739 045 qui porte sur un procédé de fabrication d'une aube creuse de turbomachine. Cette technique de pulvérisation présente les étapes suivantes :
a) application d'un masque de type organique sur au moins une face d'au moins une des pièces primaires ;
b) découpe du masque suivant un motif prédéfini représentant les limites des zones soudées et non soudées au moyen d'un outil spécifique piloté par ordinateur ;
c) pelage des zones non soudées ;
d) nettoyage des surfaces ;
e) dépôt d'un produit anti-diffusion sur les surfaces précédemment préparées ;
f) pelage du masque restant ;
g) traitement de pré-cuisson du produit anti-diffusion ;
h) nettoyage et contrôle des surfaces à souder.

On constate que l'étape c) de pelage des zones non soudées provoque des petits arrachements locaux du masque, ce qui détériore la rectitude de la frontière de dépôt. De plus, le pelage de l'étape f) engendre des effondrements et/ou arrachements locaux des zones périphériques du dépôt. Ces deux phénomènes contribuent donc à réduire la précision géométrique des dépôts et, en conséquence, la qualité des surfaces à souder. De plus, il est important de maîtriser la viscosité du produit anti-diffusion pour recouvrir correctement, à l'étape e), les surfaces précédemment préparées.

Ainsi, on comprend que cette technique de pulvérisation est lourde à mettre en oeuvre, nécessite un temps important de réalisation et pour un résultat présentant des imprécisions.

Enfin, le document EP0849029 décrit le préambule de la revendication 1 et propose l'application du produit anti-diffusion par un dépôt direct réalisé par le procédé de jets de fluide. Cette technique est proche du procédé d'impression par jets d'encre puisqu'on utilise une tête d'impression mobile au-dessus de la plaque, dont le trajet est piloté par ordinateur, le fluide étant transféré par jets depuis un réservoir sur la face de la plaque selon un motif pré-défini.

Ainsi, cette technique permet de déposer le produit directement sur la pièce sans l'intermédiaire d'un écran de sérigraphie ou une étape préalable de dépôt d'un produit masquant, ce qui simplifie l'opération de dépôt et supprime l'étape de fabrication, d'entretien et de réglage/contrôle de cadres de sérigraphie.

Toutefois, cette technique de dépôt direct par le procédé de jets de fluide requiert un ajustage précis de la viscosité du fluide formant le produit anti-diffusion, notamment par l'ajout d'agents anti-déposition et anti-coagulant. Ces éléments rajoutés rendent en général le produit déposé contaminant vis-à-vis du support, notamment lorsque celui-ci est en alliage à base titane.

La présente invention a donc pour objectif de surmonter les inconvénients des techniques de dépôt de produit anti-diffusion de l'art antérieur, en particulier sans avoir à maîtriser de manière drastique la viscosité du produit anti-diffusion.

Plus précisément, la présente invention se rapporte à l'amélioration des conditions dans lesquelles est réalisée l'étape de soudage-diffusion et en particulier la présente invention vise à contribuer à l'élimination, avant mise à la température de soudage-diffusion, de toute source de contamination des surfaces à assembler, notamment des résidus de la dégradation du liant organique du produit anti-diffusion.

La présente invention vise également à permettre, de manière simple, fiable et avec une grande précision, le dépôt du produit anti-diffusion selon les motifs prédéfinis, en particulier avec une grande netteté le long des bordures de ces motifs.

De manière connue en soi, la présente invention porte sur un procédé de fabrication d'une pièce mécanique creuse par soudage-diffusion et formage superplastique, comprenant les étapes suivantes :
a) fourniture d'au moins deux pièces primaires en matériau superplastique ;
b) dépôt suivant un motif prédéfini d'un produit anti-diffusion sur au moins une face desdites pièces primaires ;
c) assemblage des pièces primaires à leur périphérie à l'exception d'un emplacement formant un passage, lesdites pièces primaires formant un empilement en délimitant entre elles deux à deux une cavité, ladite au moins une face, sur laquelle ledit produit anti-diffusion a été déposé à l'étape b), étant disposée en regard de ladite cavité ;
d) soudage-diffusion de l'empilement en pression isostatique ;
e) placement de l'assemblage soudé dans un moule,
f) mise à la température de formage superplastique dudit moule et injection sous la pression de formage superplastique d'un gaz inerte par ledit passage dans ladite cavité, ce qui entraîne le gonflement de l'empilement et le formage superplastique permettant l'obtention d'une ébauche de la pièce mécanique.

Afin de parvenir aux buts précités, de manière caractéristique selon la présente invention, l'étape b) est effectuée suivant la suite d'opérations suivante :
b1) application d'une couche du produit anti-diffusion, comprenant une poudre, sur toute la surface de ladite au moins une face des pièces primaires ;
b2) frittage localisé du produit anti-diffusion suivant ledit motif prédéfini par chauffage résultant de l'application localisée d'un rayon laser suivant un tracé composé d'au moins une zone, ce par quoi sont créés, dans ladite au moins une zone, d'une part des liaisons entre les particules de la poudre, et d'autre part un phénomène de diffusion entre les particules de la poudre et le matériau de ladite au moins une face des pièces primaires ;
b3) retrait du produit anti-diffusion dans les régions non soumises au rayon laser.

De cette manière, on comprend que puisque la réalisation du dépôt du produit anti-diffusion selon le motif prédéfini s'effectue par frittage grâce au passage du rayon laser, on peut se passer du réglage précis de la viscosité de ce produit anti-diffusion. En conséquence, le recours à un liant de nature organique n'est plus impératif, ce qui élimine tous les problèmes de contamination éventuelle des surfaces à souder par les résidus de dégradation du liant organique.

Egalement, un tel procédé est facile à mettre en oeuvre du fait qu'il permet de simplifier l'étape de dépôt puisqu'il est possible de déposer directement le produit anti-diffusion sans l'intermédiaire d'un écran de sérigraphie ou d'une couche de produit masquant.

Cette solution présente donc l'avantage, par rapport à la technique classique de sérigraphie, de supprimer les étapes de fabrication, d'entretien et de contrôle et/ou réglage des cadres de sérigraphie. Par rapport à la technique de dépôt par le procédé de jets de fluide, la présente invention ne présente pas le risque de bouchage de la tête encreuse de la tête d'impression.

Globalement, grâce au procédé selon la présente invention, il est possible d'obtenir une bonne résolution dans la définition des motifs déposés, avec une très bonne reproductibilité de la géométrie des dépôts grâce à la résolution et la précision de la commande, qui est préférentiellement automatisée, du rayon laser.

De plus, il faut relever que le frittage permet de réaliser une bonne adhésion du produit anti-diffusion sur la (ou les) face(s) concernée(s) de la (ou des) pièce(s) primaire(s), ce qui élimine complètement les risques de migration de particules anti-diffusion dans les zones qui sont à souder par soudage-diffusion.

Enfin, il faut noter que l'étape de frittage par rayon laser induit un chauffage qui permet de dégrader le liant, donc de l'éliminer.

Le principe du frittage d'une poudre minérale par rayon laser est présenté par FR2772021 dans le cadre d'une application de marquage, en particulier de décoration.

De préférence, ledit produit anti-diffusion comporte ladite poudre et un liant et ladite poudre est une charge anti-diffusion formée d'un matériau réfractaire comprenant au moins l'un des matériaux appartenant au groupe composé de l'oxyde d'yttrium, de l'alumine, du graphite et du nitrure de bore, ou toute autre poudre en un matériau compatible avec le substrat.

De préférence, ladite charge anti-diffusion est une poudre d'oxyde d'yttrium dont les particules présentent une taille moyenne inférieure à 50 µm.

Selon une disposition préférentielle, ledit liant n'est pas organique, il est à base aqueuse et en particulier ledit liant est de l'eau.

Un tel liant permet en effet de s'affranchir des problèmes liés à l'élimination des résidus de dégradation des liants organiques. En effet, lorsque le liant est de l'eau, son élimination est effectuée par évaporation lors du passage du rayon laser.

Selon une autre disposition préférentielle, l'étape b1) d'application d'une couche du produit anti-diffusion est effectuée par une méthode connue de l'homme de l'art, par exemple par pulvérisation, enduction, sérigraphie etc... .

Cette disposition peut être mise en oeuvre de manière simple au moyen de buses de pulvérisation qui projettent directement le produit anti-diffusion sur toute la surface de ladite au moins une face des pièces primaires constituées de plaques.

Selon un mode de réalisation préférentiel, l'étape b2) de frittage est effectuée sous air ou, de préférence, sous une atmosphère neutre (de gaz inerte), en particulier sous une atmosphère d'argon.

De cette manière, en effet, on évite tout risque de contamination de ladite au moins une face des pièces primaires, formant le support pour le dépôt de produit anti-diffusion. Il a en effet été montré qu'il n'y avait en fait pas de contamination de la couche de produit anti-diffusion même lorsque le frittage n'est pas réalisé sous une atmosphère neutre, notamment lors d'un frittage sous air.

De préférence, l'étape b3) de retrait du produit non fritté est effectuée par une opération non abrasive, et ceci afin de ne pas endommager les surfaces devant être soudées par soudage-diffusion. En particulier, selon une disposition préférentielle, l'étape b3) de retrait du produit non fritté est effectuée par lavage, ce qui constitue un moyen très simple. Cette étape b3) de retrait du produit non fritté peut également être effectuée par toute autre action, en particulier mécanique, non abrasive, telle que le brossage.

Selon une autre disposition préférentielle, le laser est dirigé par un système de pilotage commandé par ordinateur comme il est déjà connu dans le domaine du marquage laser.

Egalement, on prévoit avantageusement que, pour chaque zone du tracé, ledit système de pilotage démarre le parcours de la portion correspondante du tracé à l'intérieur de ladite zone. De cette manière, on élimine les risques de défauts ponctuels (pouvant être dûs à l'application prolongée du rayon laser) sur le bord des zones recouvertes de produit anti-diffusion fritté, c'est-à-dire à l'interface des zones soudées et non soudées.

La présente invention porte également sur un procédé de fabrication tel que défini précédemment, caractérisé en ce que ladite pièce mécanique est une aube creuse de turbomachine, en particulier une aube de rotor de soufflante, et en ce qu'à l'étape a) sont fournies trois pièces primaires (formées de plaques) composées d'une pièce primaire d'extrados, d'une tôle centrale et d'une pièce primaire d'intrados.

D'autres avantages et caractéristiques de l'invention ressortiront à la lecture de la description suivante faite à titre d'exemple et en référence aux dessins annexés dans lesquels :
- la figure 1 est une vue de face d'une aube creuse de turbomachine obtenue par le procédé de fabrication conforme à l'invention ;
- la figure 2 est une vue schématique en coupe par un plan transversal de l'aube représentée à la figure 1 ;
- la figure 3 montre un détail de liaison entre deux éléments de l'aube représentée sur les figures 1 et 2 ;
- la figure 4 montre la situation à la fin de la première phase de l'étape de dépôt d'un produit anti-diffusion, c'est-à-dire après que le produit anti-diffusion ait été appliqué et lorsqu'il recouvre toute la surface d'une pièce primaire ;
- la figure 5 montre la deuxième phase de l'étape de dépôt d'un produit anti-diffusion, correspondant à l'application localisée d'un rayon laser suivant un tracé, provoquant un chauffage aboutissant au frittage localisé du produit anti-diffusion suivant ledit motif prédéfini ;
- la figure 6 montre la troisième phase de l'étape de dépôt d'un produit anti-diffusion, à savoir le retrait du produit anti-diffusion dans les régions non soumises au rayon laser ;
- la figure 7 est une coupe transversale de la pièce primaire dans la situation de la figure 5 ; et,
- la figure 8 est un schéma de principe du dispositif permettant de réaliser l'étape de dépôt d'un produit anti-diffusion selon un motif prédéfini.

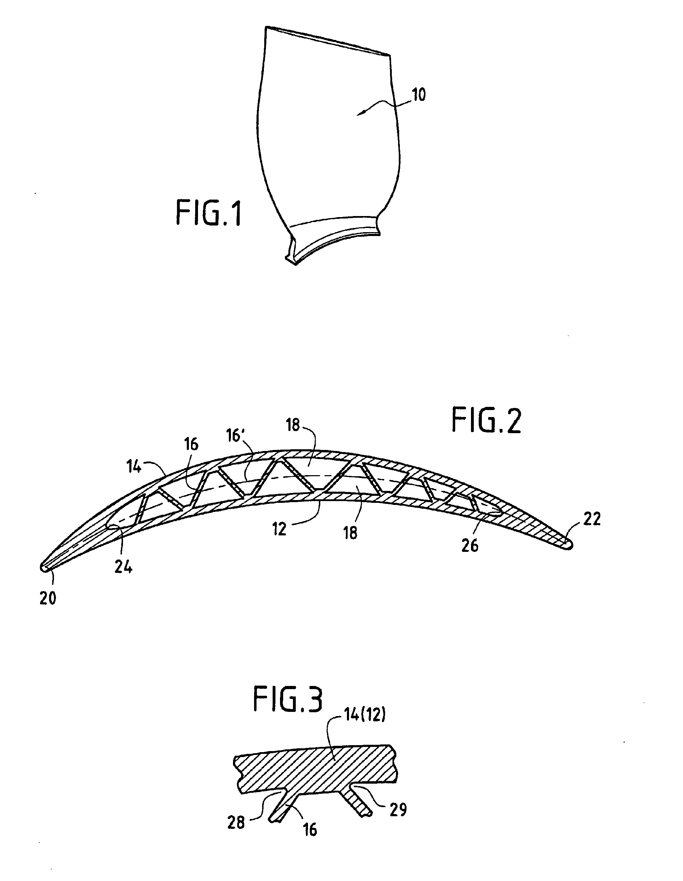

Les figures 1 et 2 concernent une aube 10 creuse de turbomachine, notamment une aube de soufflante à grande corde destinée par exemple à un turboréacteur à double flux.

Comme on peut le voir de manière plus complète sur la section transversale représentée à la figure 2, l'aube 10 est constituée d'une peau d'intrados 12, d'une peau d'extrados 14 et d'un élément central 16 formant entretoise.

Comme il apparaît, les peaux 12 et 14 sont écartées pour former une cavité interne 18 dans laquelle est disposé l'élément central 16 qui forme de multiples raidisseurs reliant entre elles la peau d'intrados 12 à la peau d'extrados 14.

L'élément central 16 est issu, avant l'étape de soudage diffusion, d'une tôle centrale 16' représentée schématiquement par une ligne en trait mixte sur la figure 2.

L'aube 10 résulte d'un procédé de fabrication perfectionné qui fait l'objet de la présente invention, la peau d'intrados 12 et la peau d'extrados 14 étant soudées, par soudage diffusion, le long de leur périphérie pour former un bord d'attaque 20 (à gauche sur la figure 2) et un bord de fuite 22 (à droite sur la figure 2). La cavité interne 18 de l'aube 10 présente un rayon 24 du côté du bord d'attaque 20 et un rayon 26 du côté bord de fuite 22.

Comme on le voit de manière plus précise sur la figure 3, l'élément central 16 formant entretoise comporte des surfaces soudées sur la peau d'intrados 12 et des surfaces soudées sur la peau d'extrados 14, ce qui réalise des liaisons entre des portions de l'élément central 16, qui forment des raidisseurs, et les peaux 12 et 14, avec des rayons 28 ou 29.

Selon une première étape a) du procédé de fabrication selon l'invention, l'aube 10 visible sur les figures 1 et 2 est réalisée à partir de trois pièces primaires (une pièce primaire d'extrados, la tôle centrale 16' et une pièce primaire d'intrados) qui sont obtenues par forgeage, matriçage sur presse suivi d'un usinage pour la finition.

A l'étape suivante b), un dépôt de barrières de diffusion est effectué suivant un motif prédéfini correspondant aux régions des faces des pièces primaires d'extrados et d'intrados situées en regard de la cavité 18 et qui ne seront pas reliées à l'élément formant entretoise 16.

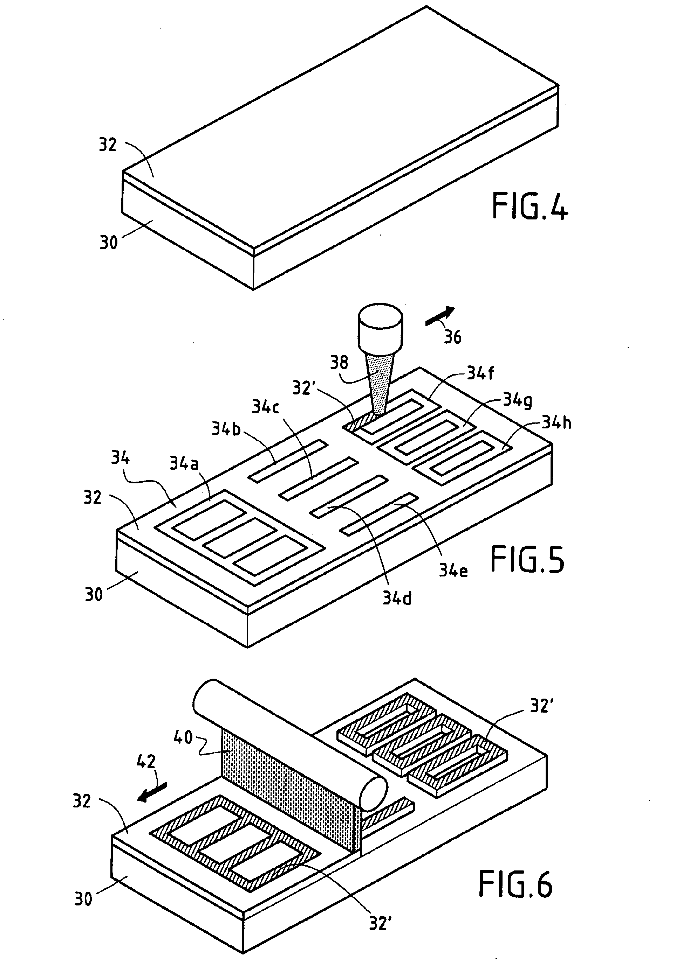

De façon plus détaillée, cette étape b) est décomposée de la manière suivante :
b1) Application sur l'une des pièces primaires précitées 30, d'une couche 32 d'un produit anti-diffusion comprenant une poudre, sur toute la surface concernée de la pièce primaire 30, d'où il résulte la situation visible sur la figure 4;
b2) Suivant un motif 34 prédéfini composé des zones 34a, 34b, 34c, 34d, 34e, 34f, 34g et 34h (zones correspondant aux régions des faces des pièces primaires d'extrados et d'intrados situées en regard de la cavité 18 et qui ne seront pas reliées à l'élément formant entretoise 16), effectuer le frittage localisé de la poudre contenue dans la couche du produit anti-diffusion 32 le long d'un tracé 36 au moyen d'un rayon laser 38 (voir la figure 5 sur laquelle les zones 34a à 34h présentent une forme choisie à titre d'exemple illustratif mais ne correspondant pas à la forme permettant d'obtenir la liaison particulière entre pièces primaires d'extrados et d'intrados et l'élément formant entretoise 16) ;
b3) Retirer la couche 32 du produit anti-diffusion dans les zones non soumises au rayon laser 38 à l'aide de moyens de nettoyage non abrasifs 40 (figure 6).

L'étape de dépôt du produit anti-diffusion tel qu'il vient d'être décrit en relation avec les figures 4 à 6 et selon la suite d'opérations b1) à b3) est réalisée, dans le cas du procédé de fabrication d'une aube 10 telle qu'illustrée sur les figures 1 à 3, au moins sur deux faces des pièces primaires.

Plus exactement, au moins une face parmi la face interne de la pièce primaire d'intrados (qui va aboutir à la peau d'intrados 12) et la face de la tôle centrale 16' située en regard, ainsi qu'au moins une des faces parmi la face interne de la pièce primaire d'extrados (qui va aboutir à la peau d'extrados 14) et la face de la tôle centrale 16' qui est située en regard, subissent cette étape b) de dépôt.

Il s'agit bien entendu d'assurer la liaison entre la tôle centrale 16' et d'une part la face interne de la pièce primaire d'intrados et d'autre part la face interne de la pièce primaire d'extrados, lesquelles faces internes sont tournées vers la cavité 18.

En l'espèce, les pièces primaires sont réalisées dans un alliage à base de titane et le produit anti-diffusion est composé d'un liant formé d'eau et d'une poudre d'une charge anti-diffusion à base d'oxyde d'yttrium.

En relation avec la figure 4, l'application du produit anti-diffusion 32 sur la pièce primaire 30 est réalisée de manière préférentielle par pulvérisation, d'autres techniques d'application telles que l'enduction au rouleau, au pinceau ou par trempage étant également possibles pour autant que l'on aboutisse à un ensemble pouvant être manipulé, l'adhérence du produit anti-diffusion 32 étant toutefois limitée pour que ce produit puisse être retiré de la face de la pièce primaire qui le porte par simple lavage.

On souhaite aboutir, après frittage, à un produit anti-diffusion fritté 32' ayant une épaisseur d'au moins 5 µm, la poudre d'oxyde d'yttrium présentant des particules avec une taille moyenne de l'ordre de 5 µm (taille moyenne comprise entre 3 et 7 µm, de préférence entre 4 et 6 µm, de préférence sensiblement égale à 5 µm).

Le rayon laser 38 est réglé de façon à ce qu'il apporte une énergie suffisante à la couche du produit anti-diffusion 32 afin de fritter les particules de la poudre formant la charge anti-diffusion, sans réaliser la fusion de cette poudre, tout en créant un phénomène de diffusion entre le produit anti-diffusion fritté 32 et le matériau de la face de la pièce primaire 30 sur laquelle a été appliquée la couche de produit anti-diffusion 32.

Egalement, lors du passage du rayon laser 38, l'eau formant le liant du produit anti-diffusion est éliminée par évaporation. Si toutefois un autre liant, notamment un liant de nature organique, est utilisé, l'échauffement dû au passage du rayon laser est suffisant pour dégrader ce liant

Il est entendu que le réglage du rayon laser 38 permet également d'éviter un endommagement et/ou une détérioration du matériau de la pièce primaire 30.

De façon à bien délimiter, avec une grande précision et une grande rectitude, le motif prédéfini 34, principalement le long du contour des zones 34a à 34h, de manière préférentielle, il est prévu que le rayon laser 38 effectue son tracé 36 lui permettant de passer en chaque endroit des zones 34a à 34h, en commençant, pour chacune de ces zones, le parcours de la portion correspondante du tracé 36 à l'intérieur de cette zone et non le long de sa bordure.

De cette manière, on évite des défauts ponctuels le long du contour des zones 34a à 34h, pour permettre une grande netteté et une grande précision de la localisation du produit anti-diffusion fritté 32'.

Une fois que l'ensemble des zones 34a à 34h a reçu, au moyen du rayon laser 38, l'énergie suffisante pour fritter le produit anti-diffusion selon le motif 34 prédéfini, on procède donc au retrait de cette couche 32 du produit anti-diffusion non fritté dans les régions correspondantes, c'est-à-dire en dehors du motif 34, grâce aux moyens de nettoyage 40 qui se déplacent sur toute la surface de la pièce primaire 30 (flèche 42 sur la figure 6).

Il est prévu de réaliser ce nettoyage au moyen d'un lavage à l'eau, par jets, étant entendu qu'il est également possible d'effectuer ce nettoyage par immersion dans un solvant, par une action mécanique (essuyage, brossage...) ou encore par immersion dans un liquide soumis à un flux d'ultrasons.

Il est entendu que l'on choisit des moyens de nettoyage 40 non abrasifs afin de ne pas endommager les contours du produit anti-diffusion fritté 32'.

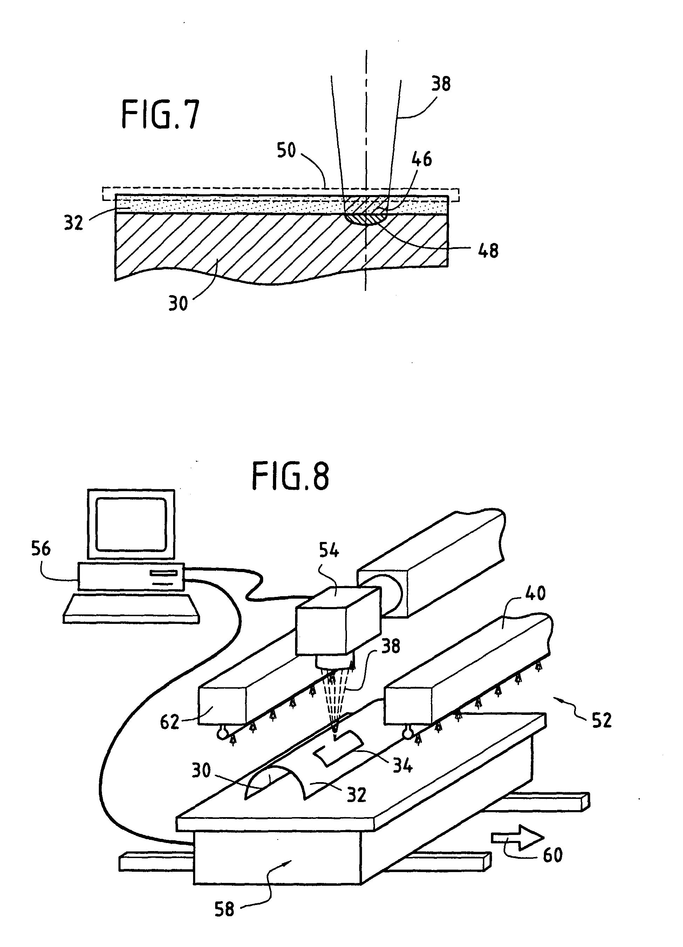

En relation avec la figure 7, est représenté de manière plus précise le phénomène de frittage par le rayon laser 38 qui apporte de l'énergie dans une région frittée 46 de la couche 32 pour réaliser le frittage des particules de poudre de cette couche 32, et permettre la diffusion entre cette région 46 et une région d'accrochage 48 superficielle de la pièce primaire 30. Cette diffusion entre les régions 46 et 48 permet de fixer de manière solide les particules de poudre de la région frittée 46 sur la pièce primaire 30 et d'obtenir un dépôt résistant du produit anti-diffusion.

A cet effet, le rayon laser 38 est déplacé pour permettre le positionnement du point de focalisation du rayonnement dans une région de focalisation 50 dans laquelle est placée la face libre de la couche 32 du produit anti-diffusion.

Sur la figure 8 est illustré schématiquement un dispositif 52 permettant la mise en oeuvre de l'étape de dépôt selon l'invention.

Le rayon laser 38 est piloté par des moyens mécaniques 54 commandés par une interface informatique 56.

La pièce primaire 30 est fixée sur une table 58, la table 58 pouvant être orientée grâce à une commande exercée par l'interface informatique 56 afin de placer la face de la pièce primaire 30 toujours dans la région de focalisation 50 du rayon laser 38, ceci afin de permettre l'opération de dépôt également sur des faces non planes.

La table 58 est déplaçable selon une direction 60, d'amont en aval, afin de se trouver successivement positionné sous une rampe de pulvérisation 62 permettant l'application de la couche de produit anti-diffusion 32, sous le rayon laser 38 lors de la deuxième opération de l'étape b) de dépôt, puis sous les moyens de nettoyage 40 constitués d'une rampe de jets d'eau.

Il est également nécessaire de réaliser un séchage du produit anti-diffusion 32 après sa pulvérisation et avant son frittage. Un tel séchage (non représenté) est réalisé à une température inférieure à 100°C au moyen d'un (ou de plusieurs) ventilateur(s) ou d'une étuve.

Un cas de figure non représenté consiste à placer le dispositif 52 de la figure 8 dans une enceinte remplie d'une atmosphère de gaz neutre tel que de l'argon, et ceci afin d'éviter toute contamination de la pièce primaire 30.

Les étapes ultérieures du procédé de fabrication d'une aube 10 creuse (non représentées) sont réalisées de manière connue :
c) on assemble les pièces primaires (pièce primaire d'intrados, tôle centrale 16' et pièce primaire d'extrados) préalablement empilées, à leur périphérie à l'exception d'un emplacement formant un passage ;
d) on effectue le soudage de l'empilement par soudage diffusion dans une enceinte de compression isostatique de manière à assurer une liaison intime entre les pièces primaires constitutives de l'aube, sauf à l'emplacement du passage précité et des zones recouvertes de la couche 32' du produit anti-diffusion fritté ;
e) on place l'assemblage ainsi soudé dans un moule ;
f) on réalise le formage des pièces primaires constitutives de l'aube 10 dans des conditions superplastiques en appliquant dans la cavité interne 18 une pression de gonflage (de préférence par un gaz inerte) de manière à obtenir, le profil recherché illustré sur la figure 2.

Grâce à la réalisation du dépôt du produit anti-diffusion selon la présente invention, au moyen du frittage sous rayon laser, on garantit l'utilisation d'un produit anti-diffusion 32' stable qui ne va pas se déplacer ni se détériorer notamment pendant la mise sous pression de l'étape de soudage diffusion.

Il est entendu que la présente description a été réalisée en relation avec la fabrication d'une aube 10 obtenue à partir de trois pièces primaires initiales en forme de plaque ou de tôle, ce procédé pouvant également s'appliquer pour un nombre initial de pièces primaires supérieur ou simplement égal à deux.

Egalement, d'autres pièces mécaniques creuses peuvent être réalisées selon le procédé de fabrication de la présente invention, notamment des ailes, des caissons, des capots, des poutrelles ... ou toute autre pièce mécanique creuse, éventuellement structurelle.

A titre d'exemple ; les conditions suivantes ont été mises en oeuvre pour la fabrication d'une aube creuse :
- alliage du support, c'est-à-dire de la pièce primaire 30 (d'extrados ou d'intrados) : Alliage de titane TA6V ;
- produit anti-diffusion 32 : mélange d'oxyde d'yttrium et d'eau en proportion 50/50;
- application de la couche de produit anti-diffusion 32 par pulvérisation ;
- caractéristique de la couche de produit anti-diffusion 32, après dépôt et séchage : 5 à 10 mg/ cm² ;

L'opération de frittage par rayon laser a été effectuée dans les conditions opératoires suivantes :
- longueur d'onde : infra-rouge court,
- puissance moyenne : 5 à 100 W,
- vitesse de balayage : 50 à 3000 mm/s,
- fréquence : 2 à 50 Hz,
- diamètre du rayon laser (point de focalisation) : 10 à 200 µm ;
- épaisseur du produit anti-diffusion après frittage: 10 à 25 µm.

## Revendications

1. Procédé de fabrication d'une pièce mécanique creuse (10) par soudage-diffusion et formage superplastique, comprenant les étapes suivantes :
a) fourniture d'au moins deux pièces primaires (16', 30) en matériau superplastique ;
b) dépôt suivant un motif prédéfini (34) d'un produit anti-diffusion (32) sur au moins une face desdites pièces primaires (16', 30) ;
c) assemblage des pièces primaires (16', 30) à leur périphérie à l'exception d'un emplacement formant un passage, lesdites pièces primaires (16', 30) formant un empilement en délimitant entre elles deux à deux une cavité (18), ladite au moins une face étant disposée en regard de ladite cavité (18) ;
d) soudage-diffusion de l'empilement en pression isostatique ;
e) placement de l'assemblage soudé dans un moule,
f) mise à la température de formage superplastique dudit moule et injection sous la pression de formage superplastique d'un gaz inerte par ledit passage dans ladite cavité (18), ce qui entraîne le gonflement de l'empilement et le formage superplastique permettant l'obtention d'une ébauche de la pièce mécanique (10),
**caractérisé en ce que**, l'étape b) est effectuée suivant la suite d'opérations suivante :
b1) application d'une couche du produit anti-diffusion (32), comprenant une poudre, sur toute la surface de ladite au moins une face des pièces primaires (16', 30) ;
b2) frittage localisé du produit anti-diffusion (32) suivant ledit motif (34) prédéfini par chauffage résultant de l'application localisée d'un rayon laser (38) suivant un tracé (36) composé d'au moins une zone (34a à 34h), ce par quoi sont créés, dans ladite au moins une zone (34a à 34h), d'une part des liaisons entre les particules de la poudre, et d'autre part un phénomène de diffusion entre les particules de la poudre et le matériau de ladite au moins une face des pièces primaires ;
b3) retrait du produit anti-diffusion (32) dans les régions non soumises au rayon laser (38).

2. Procédé de fabrication selon la revendication 1, **caractérisé en ce que** ledit produit anti-diffusion (32) comporte ladite poudre et un liant et **en ce que** ladite poudre est une charge anti-diffusion formée d'un matériau réfractaire comprenant au moins l'un des matériaux appartenant au groupe composé de l'oxyde d'yttrium, de l'alumine, du graphite et du nitrure de bore, ou toute autre poudre en un matériau compatible avec le substrat.

3. Procédé de fabrication selon la revendication 1, **caractérisé en ce que** ladite charge anti-diffusion est une poudre d'oxyde d'yttrium dont les particules présentent une taille moyenne inférieure à 50 µm.

4. Procédé de fabrication selon l'une quelconque des revendications précédentes, **caractérisé en ce que** ledit liant est de l'eau.

5. Procédé de fabrication selon l'une quelconque des revendications précédentes, **caractérisé en ce que** l'étape b1) d'application d'une couche du produit anti-diffusion est effectuée par pulvérisation.

6. Procédé de fabrication selon l'une quelconque des revendications précédentes, **caractérisé en ce que** l'étape b2) de frittage est effectuée sous atmosphère de gaz inerte, de préférence sous une atmosphère d'argon.

7. Procédé de fabrication selon l'une quelconque des revendications précédentes, **caractérisé en ce que** l'étape b3) de retrait est effectuée par lavage, ou par toute autre action mécanique telle que le brossage.

8. Procédé de fabrication selon l'une quelconque des revendications précédentes, **caractérisé en ce que** ledit laser (38) est dirigé par un système de pilotage commandé par ordinateur.

9. Procédé de fabrication selon la revendication 8, **caractérisé en ce que**, pour chaque zone (34a à 34h), ledit système de pilotage démarre le parcours de la portion correspondante du tracé (36) à l'intérieur de ladite zone (34a à 34h).

10. Procédé de fabrication selon l'une quelconque des revendications précédentes, **caractérisé en ce que** ladite pièce mécanique est une aube creuse de turbomachine (10), en particulier une aube de rotor de soufflante, et **en ce qu'**à l'étape a) sont fournies trois pièces primaires composées d'une pièce primaire d'extrados, d'une tôle centrale (16') et d'une pièce primaire d'intrados.

## Claims

1. A method of fabricating a hollow mechanical part (10) by diffusion welding and superplastic forming, the method comprising the following steps:
a) providing at least two primary parts (16', 30) of superplastic material;
b) providing an anti-diffusion substance (32) in a predefined pattern (34) on at least one face of said two faces of said primary parts (16', 30);
c) assembling said primary parts (16', 30) together at their said periphery, with the exception of a passage-forming location, said primary parts (16', 30) forming a stack and defining between them a cavity (18), said at least one face being placed facing into said cavity (18);
d) diffusion welding the stack under isostatic pressure;
d) placing the welded assembly in a mold; and
f) raising said mold to the superplastic forming temperature and injecting an inert gas at the superplastic forming pressure via said passage into said cavity (18), thereby causing the stack to inflate and implementing superplastic forming, enabling a blank of the mechanical part (10) to be obtained;
the method being **characterized in that** step b) is performed in application of the following sequence of operations:
b1) applying a layer of anti-diffusion substance (32) comprising a powder over the entire surface of said at least one face of the primary parts (16', 30);
b2) localized sintering of the anti-diffusion substance (32) in said predefined pattern (34) by the heating that results from localized application of a laser beam (38) along a track (36) made up of at least one zone (34a to 34h), thereby producing, in said at least one zone (34a to 34h), both bonds between the particles of powder and also a diffusion phenomenon between the particles of powder and the material of said at least one face of the primary part;
b3) removing the anti-diffusion substance (32) from the regions that are not subjected to the laser beam (38).

2. A method of fabrication according to claim 1, **characterized in that** said anti-diffusion substance (32) comprises said powder and a binder, and **in that** said powder is an anti-diffusion filler constituted by a refractory material comprising at least one of the materials belonging to the group constituted by: yttrium oxide; alumina; graphite; and boron nitride; or any other powder made of a material that is compatible with the substrate.

3. A method of fabrication according to claim 1, **characterized in that** said anti-diffusion filler is a yttrium oxide powder with particles presenting a mean size of less than 50 µm.

4. A method of fabrication according to any preceding claim, **characterized in that** said binder is water.

5. A method of fabrication according to any preceding claim, **characterized in that** step b1) of applying a layer of anti-diffusion substance is performed by spraying.

6. A method of fabrication according to any preceding claim, **characterized in that** step b2) of sintering is performed under an atmosphere of inert gas, preferably under an atmosphere of argon.

7. A method of fabrication according to any preceding claim, **characterized in that** step b3) of removing substance is performed by washing, or by any other mechanical action such as brushing.

8. A method of fabrication according to any preceding claim, **characterized in that** said laser (38) is moved by a computer-controlled drive system.

9. A method of fabrication according to claim 8, **characterized in that**, for each zone (34a to 34h), said drive system begins the path of the corresponding portion of the track (36) inside said zone (34a to 34h).

10. A method of fabrication according to any preceding claim, **characterized in that** said mechanical part is a hollow blade (10) for a turbomachine, in particular a fan rotor blade, and **in that** in step a), three primary parts are provided comprising a suction side primary part, a central sheet (16'), and a pressure side primary part.

## Patentansprüche

1. Verfahren zur Herstellung eines mechanischen Hohlteils (10) durch Diffusionsschweißen und superplastische Formung, umfassend die folgenden Schritte:
a) Liefern von wenigstens zwei Primärteilen (16', 30) aus superplastischem Werkstoff,
b) Aufbringen eines diffusionshemmenden Mittels (32) nach einem vorbestimmten Muster (34) auf wenigstens einer Seite der Primärteile (16', 30),
c) Verbinden der Primärteile (16', 30) an ihrem Umfang, mit Ausnahme einer einen Durchgang bildenden Stelle, wobei die Primärteile (16', 30) eine Aufschichtung bilden und dabei paarweise zwischen sich einen Hohlraum (18) begrenzen, wobei die wenigstens eine Seite gegenüber dem Hohlraum (18) angeordnet ist,
d) Diffusionsschweißen der Aufschichtung unter isostatischem Druck,
e) Anordnen des geschweißten Verbands in einer Form,
f) Erhitzen der Form auf die Temperatur des superplastischen Formens und Einspritzen eines Inertgases unter dem Druck des superplastischen Formens, über den Durchgang in den Hohlraum (18), was zu einem Aufblähen der Aufschichtung und zur superplastischen Formung führt, die den Erhalt eines Rohlings des mechanischen Teils (10) ermöglichen,
**dadurch gekennzeichnet, daß** Schritt b) entsprechend der nachstehenden Folge von Arbeitsschritten durchgeführt wird:
b1) Auftragen einer Schicht des ein Pulver enthaltenden diffusionshemmenden Mittels (32) auf der gesamten Oberfläche der wenigstens einen Seite der Primärteile (16', 30),
b2) stellenweises Sintern des diffusionshemmenden Mittels (32) entsprechend dem vorbestimmten Muster (34) durch Erhitzen, das daraus resultiert, daß ein Laserstrahl (38) entlang einem aus wenigstens einem Bereich (34a bis 34h) bestehenden Verlauf (36) stellenweise angelegt wird, wodurch in dem wenigstens einen Bereich (34a bis 34h) einerseits Verbindungen zwischen den Partikeln des Pulvers geschaffen werden und andererseits ein Diffusionsphänomen zwischen den Partikeln des Pulvers und dem Material der wenigstens einen Seite der Primärteile erzeugt wird,
b3) Entfernen des diffusionshemmenden Mittels (32) in den nicht dem Laserstrahl (38) ausgesetzten Bereichen.

2. Herstellungsverfahren nach Anspruch 1, **dadurch gekennzeichnet, daß** das diffusionshemmende Mittel (32) das genannte Pulver und ein Bindemittel enthält, und daß das Pulver ein diffusionshemmender Füllstoff ist, der von einem feuerfesten Material gebildet ist, das wenigstens eines der Materialien umfaßt, die zur Gruppe bestehend aus Yttriumoxid, Aluminiumoxid, Graphit und Bornitrid gehören, oder jedwedes andere Pulver aus einem mit dem Substrat kompatiblen Material ist.

3. Herstellungsverfahren nach Anspruch 1, **dadurch gekennzeichnet, daß** der diffusionshemmende Füllstoff ein Yttriumoxidpulver ist, dessen Partikel eine durchschnittliche Größe von unter 50 µm aufweisen.

4. Herstellungsverfahren nach einem der vorhergehenden Ansprüche, **dadurch gekennzeichnet, daß** das Bindemittel Wasser ist.

5. Herstellungsverfahren nach einem der vorhergehenden Ansprüche, **dadurch gekennzeichnet, daß** Schritt b1) des Auftragens einer Schicht des diffusionshemmenden Mittels durch Zerstäuben erfolgt.

6. Herstellungsverfahren nach einem der vorhergehenden Ansprüche, **dadurch gekennzeichnet, daß** Schritt b2) des Sinterns unter Inertgasatmosphäre, vorzugsweise unter einer Argonatmosphäre durchgeführt wird.

7. Herstellungsverfahren nach einem der vorhergehenden Ansprüche, **dadurch gekennzeichnet, daß** Schritt b3) des Entfernens durch Abwaschen oder durch jedwede andere mechanische Tätigkeit, wie zum Beispiel Bürsten erfolgt.

8. Herstellungsverfahren nach einem der vorhergehenden Ansprüche, **dadurch gekennzeichnet, daß** der Laser (38) durch ein computergesteuertes Steuerungssystem geführt wird.

9. Herstellungsverfahren nach Anspruch 8, **dadurch gekennzeichnet, daß** für jeden Bereich (34a bis 34h) das Steuerungssystem die Strecke des entsprechenden Abschnitts des Verlaufs (36) innerhalb des Bereichs (34a bis 34h) startet.

10. Herstellungsverfahren nach einem der vorhergehenden Ansprüche, **dadurch gekennzeichnet, daß** das mechanische Teil eine hohle Turbomaschinenschaufel (10), insbesondere eine Gebläserotorschaufel ist, und daß bei Schritt a) drei Primärteile geliefert werden, die von einem Rückseiten-Primärteil, von einem mittleren Blech (16') und von einem Vorderseiten-Primärteil gebildet sind.
